# EUROPEAN PATENT SPECIFICATION

(11) **EP 2 713 428 B1**
(45) Date of publication and mention of the grant of the patent: **11.01.2017**
(21) Application number: 13186283.1
(22) Date of filing: 27.09.2013
(51) Int. Cl.: H01M 4/52, C01G 53/04, H01M 4/32, H01M 10/30

(54) **Alkaline storage battery and positive electrode material for alkaline storage battery**
Alkalische Speicherbatterie und Positivelektrodenmaterial für alkalische Speicherbatterie
Batterie de stockage alcaline et matériau d'électrode positive pour batterie alcaline de stockage

(30) Priority: 28.09.2012 JP 2012217323; 28.09.2012 JP 2012217324; 28.09.2012 JP 2012217325; 13.03.2013 JP 2013050228; 20.09.2013 JP 2013195294; 20.09.2013 JP 2013195296
(43) Date of publication of application: 02.04.2014
(73) Proprietor: GS Yuasa International Ltd., Kisshoin, Minami-ku, Kyoto-shi, Kyoto 601-8520 (JP)
(72) Inventor: Kakeya, Tadashi, Kyoto-shi, Kyoto, 601-8520 (JP); Watanabe, Hideto, Kyoto-shi, Kyoto, 601-8520 (JP); Kanemoto, Manabu, Kyoto-shi, Kyoto 601-8520 (JP); Kodama, Mitsuhiro, Kyoto-shi, Kyoto, 601-8520 (JP)
(74) Representative: Isarpatent

(56) References cited:
- EP-A1- 0 774 793
- EP-A1- 0 833 397
- FR-A1- 2 750 255
- JP-A- 2001 322 817
- US-A- 5 674 643
- US-A1- 2001 033 970
- US-A1- 2003 108 792

## Description

### FIELD

The present invention relates to an alkaline storage battery and a positive electrode material for the same.

### BACKGROUND

The use of α-Ni(OH)₂ as a positive active material has been examined in order to increase the number of reaction electrons and the discharge capacity of an alkaline storage battery such as a nickel-metal hydride rechargeable battery or nickel-cadmium rechargeable battery. For stabilizing α-Ni(OH)₂ (α-phase nickel hydroxide) in an alkaline medium, dissolving Al in solid solution in an amount equivalent to 5 to 20 mol% of a Ni element in α-Ni(OH)₂ has been suggested (for example, see JP-A-2010-111522). In this case, the molar ratio of Ni:Al is in the range of 95:5 to 80:20. Moreover, since the conductivity of Ni(OH)₂ in the positive active material is low, the surface of Ni(OH)₂ particle is coated with CoOOH microparticles (for example, see WO2006/064979A1). JP-A-2007-335154 discloses that an element such as Y, Ca, Sr, or Sc is dispersed in CoOOH to improve the use efficiency of Ni at high temperatures (the number of reaction electrons in discharge per Ni atom). Moreover, this literature discloses that an element such as Zn or Ca is held in solid solution in nickel hydroxide. However, this literature describes neither the phase of Ni(OH)₂ nor the actions of Zn and Ca in the positive electrode material. Furthermore, the dissolving of Al and the like in solid solution is not disclosed. Therefore, the technique of this literature may be based on the use of β-Ni(OH)₂.
FR 2 750 255 A1 relates to a positive electrode material for an alkaline storage battery which comprises nickel hydroxide, a Ca compound and wherein at least one element selected from the group consisting of Co, Al, Fe and Mn is held in solid solution in a crystallite of the nickel hydroxide. The proportion of the element shouldn't be higher than 20 % of the hydroxide. US 2003/108792 A1 discloses a positive electrode active material comprising solid solution nickel hydroxide particles which contain magnesium and a coating layer comprising cobalt oxide, wherein the cobalt oxide comprises at least one element selected from the group consisting of Y, Yb, Lu, Ti and Ca.

### SUMMARY

An object of the present invention is to increase the number of reaction electrons of the positive active material and to increase the discharge capacity per volume of the positive electrode material.

A positive electrode material for an alkaline storage battery includes: nickel hydroxide; and at least one of a Sr compound, a Ca compound, and a compound containing at least one element selected from the group consisting of Y (yttrium) and lanthanide elements of atomic number 62 (Sm) to 71 (Lu). An A element as at least one element selected from the group consisting of Al, and Ga is held in solid solution in a crystallite of the nickel hydroxide. The content of the A element, [A]/([Ni] + [A]), is 5% or more and 16% or less. The nickel hydroxide includes α-phase nickel hydroxide and β-phase nickel hydroxide. Here, [A] represents the molarity of the A element in the crystallite and [Ni] represents the molarity of Ni.

### BRIEF DESCRIPTION OF DRAWINGS

FIG. 1 is a characteristic diagram (graph) representing the relationship between the content of Y and lanthanide element and the number of reaction electrons (the solid solubility of Al is 10 mol%, and the Y or the lanthanide element is included in the positive electrode material by a simultaneous deposition method);
FIG. 2 is a characteristic diagram (graph) representing the relationship between the content of Yb and the number of reaction electrons (the solid solubility of Al is 10 mol%);
FIG. 3 is a characteristic diagram (graph) representing the influence of the solid solubility of Al on the number of reaction electrons of positive electrode material containing Yb (Yb is included in the positive electrode material by a powder mixing method);
FIG. 4 is a characteristic diagram (graph) representing the relationship between the solid solubility of Al and the tap density of nickel hydroxide;
FIG. 5 is a characteristic diagram (graph) representing the influence of Yb and Ce on the charging curve (the solid solubility of Al is 10 mol%, and the lanthanide element is included in the positive electrode material by a simultaneous deposition method);
FIG. 6 is a characteristic diagram (graph) representing the influence of Ce, Sm, and Dy on the charging curve (the solid solubility of Al is 10 mol%, and the lanthanide element is included in the positive electrode material by a powder mixing method);
FIG. 7 is a characteristic diagram (graph) representing the relationship between the kind of the lanthanide element and the number of reaction electrons of nickel (the solid solubility of Al is 10 mol%, the lanthanide element is included in the positive electrode material by a powder mixing method, and the content of the lanthanide element is 0.5 mass% in terms of metal);
FIG. 8 is a characteristic diagram (graph) representing the relationship among the kind of the lanthanide element, the oxygen generation potential, and the Ni average oxidation potential (the solid solubility of Al is 10 mol%, the lanthanide element is included in the positive electrode material by a powder mixing method, and the content of the lanthanide element is 0.5 mass% in terms of metal);
FIG. 9 is a characteristic diagram (graph) representing the influence of the solid solubility of Ga on the number of reaction electrons of positive electrode material containing Yb (Yb is included in the positive electrode material by a powder mixing method);
FIG. 10 is a characteristic diagram (graph) representing the change of the number of reaction electrons that depends on the presence or absence of CaO;
FIG. 11 is a characteristic diagram (graph) representing the relationship between the solid solubility of aluminum and the tap density of nickel hydroxide;
FIG. 12 is a characteristic diagram (graph) representing the change of the number of reaction electrons that depends on the kind of alkaline earth element (the solid solubility of Al in the positive electrode material is 10 mol%);
FIG. 13 is a characteristic diagram (graph) representing the change of the charging curve that depends on the kind of the alkaline earth element (the solid solubility of Al in the positive electrode material is 10 mol%);
FIG. 14 is a characteristic diagram (graph) representing the influence of the content of CaO on the number of reaction electrons (the solid solubility of Al in the positive electrode material is 10 mol%); and
FIG. 15 is a characteristic diagram (graph) representing the relationship between the solid solubility of zinc and the number of reaction electrons in the nickel hydroxide containing 2 mol% of Yb₂O₃ (the solid solubility of aluminum and the solid solubility of cobalt are expressed in the drawing in the unit of mol%).

### DESCRIPTION OF EMBODIMENTS

A positive electrode material (the present positive electrode material) for an alkaline storage battery according to an aspect of the present invention includes: nickel hydroxide; and at least one of a Sr compound, a Ca compound, and a compound containing at least one element selected from the group consisting of Y and lanthanide elements of atomic number 62 (Sm) to 71 (Lu), in which: an A element as at least one element selected from the group consisting of Al, and Ga is held in solid solution in a crystallite of the nickel hydroxide; the content of the A element, [A]/([Ni] + [A]), is 5% or more and 16% or less; and the nickel hydroxide includes α-phase nickel hydroxide and β-phrase nickel hydroxide. Here, [A] represents the molarity of the A element in the crystallite and [Ni] represents the molarity of Ni element in the crystallite.

An alkaline storage battery according to an aspect of the present invention includes: a positive electrode including the present positive electrode material and a substrate; a negative electrode; and an alkaline electrolyte solution. The description of this specification related to the positive electrode material exactly applies to the alkaline storage battery. The description below applies to both the positive electrode material and the alkaline storage battery.

Any of Al, and Ga that can be the A element is substituted for some of the nickel atoms in the crystallite of the nickel hydroxide or exists between layers of the crystalline of the nickel hydroxide. The dissolving of the A element in solid solution in the crystallite of the nickel hydroxide includes the substitution of the A element for some of the nickel atoms and the interposition of the A element between the layers in the crystallite. By incorporating the A element in solid solution in the crystallite of the nickel hydroxide, α-nickel hydroxide is stabilized. It is known that the α-phase is present as a single phase generally when any of these elements is held in solid solution by approximately 20 mol% relative to Ni. If the amount held in the solid solution is less than 20 mol%, a mixed-phase state including α-phase and β-phrase is caused. In the present application, the mixed-phase state refers to a state in which α-phase and β-phrase are present in a mixed state within one primary particle. In the β-phrase, generally, the number of electrons reacting in a process of charging and discharging is 1. Meanwhile, in the α-phase, it is reported that the number of reaction electrons is greater than or equal to 1. When a lanthanide compound, a calcium compound, a strontium compound, or a mixture thereof is included in the positive electrode material including the nickel hydroxide in which Al or the like has been held in solid solution, the oxygen generation potential is increased. Therefore, at the time of charging, the nickel hydroxide can be sufficiently oxidized. As a result, the number of reaction electrons of Ni is increased. Thus, a large-capacity positive electrode material and a large-capacity alkaline storage battery can be provided.

In this positive electrode material, [A]/([Ni] + [A]) is in the range of 5 to 16%. Here, [A] represents the molarity of the A element as at least one element selected from the group consisting of Al, and Ga. [Ni] represents the molarity of Ni. The increase in number of reaction electrons due to the dissolving of the A element in solid solution and the incorporation of Y or the lanthanide compound is drastic when [A]/([Ni] + [A]) is in the range of 5 to 16%. If [A] is 0, the increase in number of reaction electrons is very small even though Y or the lanthanide compound is included. Due to the synergistic effect of the dissolving of the A element in solid solution at a concentration of 5 to 16% and the incorporation of Y or the lanthanide compound, the number of reaction electrons is increased. The A element as at least one element selected from the group consisting of Al, and Ga is preferably Al.

The effect of causing the calcium compound and/or the strontium compound to be included in the nickel hydroxide is closely related to the solid solubility of the A element in the nickel hydroxide. The number of reaction electrons is hardly changed even if the calcium compound and/or the strontium compound is included in the nickel hydroxide in which the A element is not held in solid solution. In contrast to this, when the solid solubility of the A element such as aluminum is 5 mol%, the incorporation of the calcium compound and/or the strontium compound drastically increases the number of reaction electrons. When the solid solubility of the A element is increased to 10 mol% or 15 mol%, the increase in number of reaction electrons due to the calcium compound and/or the strontium compound becomes slightly smaller. When the solid solubility of the A element is 20 mol%, the increase in number of reaction electrons due to the calcium compound and/or the strontium compound becomes very small. In this specification, the content of the A element as at least one element selected from the group consisting of Al, and Ga is represented in the unit of % by [A]/([Ni] + [A]). [A] represents the molarity of the A element as at least one element selected from the group consisting of Al, and Ga. [Ni] represents the molarity of nickel.

To increase the concentration of the A element as at least one element selected from the group consisting of Al, and Ga leads to the decrease in tap density of the nickel hydroxide in which the A element is held in solid solution. When the concentration of the A element is 20 mol%, the effect of Y or the lanthanide compound cannot be obtained substantially in some cases. Therefore, the concentration of the A element is preferably 15 mol% or less, and more preferably 12 mol% or less. The effect of increasing the number of reaction electrons due to the incorporation of Y or the lanthanide compound becomes maximum when the concentration of the A element is approximately 10 mol%. Thus, the concentration of the A element is preferably 9 mol% or more. As a result, the concentration of the A element is more preferably 9 to 15 mol%, and particularly preferably 9 to 12 mol%.

The effect of increasing the number of reaction electrons is different depending on the kind of the lanthanide element. For example, in the case of Ce with an atomic number of 58, the effect of increasing the reaction electrons cannot be obtained substantially. In the case of Y and Sm to Lu with atomic numbers of 62 to 71, the effect is obtained. In the case of Y or lanthanides with atomic numbers of 66 (Dy), 67 (Ho), 68 (Er), 69 (Tm), 70 (Yb), and 71 (Lu), the large effect can be obtained. In the case of Y or lanthanides with atomic numbers of 68 (Er), 69 (Tm), 70 (Yb), and 71 (Lu), the particularly large effect can be obtained.

The increase in number of reaction electrons is observed in the nickel hydroxide containing the calcium compound and/or the strontium compound. The increase in number of reaction electrons is not caused substantially in the nickel hydroxide containing a Mg compound or a Ba compound. Therefore, not the entire alkaline earth metals but the calcium compound and the strontium compound are effective. The effect obtained from the calcium compound is slightly larger than that from the strontium compound. Therefore, the calcium compound is particularly preferable. Note that the description made above does not exclude the incorporation of a small amount of Mg compound or Ba compound in the positive electrode.

As for the oxide or hydroxide of the lanthanide element, the effect of increasing the number of reaction electrons is large when the content in terms of metal in the positive electrode excluding the substrate is 0.25 mass% or more and 6 mass% or less. That is, the number of reaction electrons is increased when the content in terms of metal is 0.25 mass% or more and 6 mass% or less of a solid part. The effect obtained from the lanthanide element is suddenly increased along with the increase in content until the content reaches approximately 1.5 mass%. After that, the effect is increased along with the increase in content of the lanthanide element until the content reaches approximately 3 mass%. Meanwhile, excessively containing the lanthanide element leads to the decrease in nickel content. Therefore, the content of the lanthanide element is preferably 0.4 mass% or more, particularly preferably 0.5 mass% or more. The content of the lanthanide element is preferably 4 mass% or less, particularly preferably 3 mass% or less. Thus, the content of the lanthanide element is preferably 0.4 mass% or more and 4 mass% or less, particularly preferably 0.5 mass% or more and 3 mass% or less.

While the content of the calcium compound is in the range of 0 to 1 mass%, the number of reaction electrons is suddenly increased along with the increase in content of the calcium compound. While the content of the calcium compound is in the range of 1 to 5 mass%, the number of reaction electrons is gradually increased along with the increase in content of the calcium compound. Even if the content of the strontium compound is increased, the number of reaction electrons changes in a manner similar to the case of the calcium compound. In this specification, the content of these compounds is expressed by the value obtained by the conversion into an oxide thereof. In this specification, "the total content of the calcium compound and the strontium compound" is important. When the amount of the A element as at least one element selected from the group consisting of Al, and Ga in solid solution is 5 mol% or more and 16 mol% or less, the number of reaction electrons increases along with the increase in total content of the calcium compound and the strontium compound. In particular, until the content reaches 1 mass%, the number of reaction electrons drastically increases along with the increase in total content of the calcium compound and the strontium compound. Thus, the total content of the calcium compound and the strontium compound is preferably 0.2 mass% or more, more preferably 0.3 mass% or more, and particularly preferably 0.5 mass% or more. Further, the total content of the calcium compound and the strontium compound is preferably 5 mass% or less, more preferably 3 mass% or less, and particularly preferably 1 mass% or less.

As for the range including the upper and lower limits, the amount of the A element as at least one element selected from the group consisting of Al, and Ga held in solid solution is preferably 5 mol% or more and 16 mol% or less and the total content of the calcium compound and the strontium compound is preferably 0.2 mass% or more and 5 mass% or less. When the solid solubility of the A element is 5 mol% or more and 16 mol% or less, the total content of the calcium compound and the strontium compound is more preferably 0.3 mass% or more and 3 mass% or less, and the most preferably 0.5 mass% or more and 2 mass% or less. The preferable range of the total content of the calcium compound and the strontium compound is the same when the solid solubility of the A element is either 7 mol% or more and 15 mol% or less, or 8 mol% or more and 12 mol% or less.

The nickel hydroxide preferably contains Zn or Co in addition to the A element as at least one element selected from the group consisting of Al, and Ga. Moreover, the positive electrode material preferably contains a compound of at least one element selected from the group consisting of Y and lanthanide elements of atomic number 62 to 71 by 0.9 mass% or more and 6 mass% or less in terms of metal assuming that the entire positive electrode material as 100 mass%. The nickel hydroxide preferably contains Zn or Co along with the A element as at least one element selected from the group consisting of Al, and Ga and in the positive electrode material, the total content of the calcium compound and the strontium compound is preferably 0.2 mass% or more and 5 mass% or less assuming that the entire positive electrode material as 100 mass%. The number of reaction electrons becomes particularly large when the nickel hydroxide contains Zn or Co and the positive electrode material contains the compound of Y or any of the lanthanide elements with atomic number 62 to 71 by 0.9 mass% or more and 6 mass% or less in terms of metal. The number of reaction electrons becomes particularly large when the nickel hydroxide contains Zn or Co and the positive electrode material contains the calcium compound and/or the strontium compound in the total content of the calcium compound and the strontium compound is 0.2 mass% or more and 5 mass% or less.

Examples of the present invention are hereinafter described. In the implementation of the present invention, the examples below can be modified as appropriate based on the common sense of a person skilled in the art and the disclosure of the prior art.

### [Embodiment 1]

### Example 1 (powder mixing method)

A mixture aqueous solution including a hydrate of NiSO₄ and a hydrate of Al₂(SO₄)₃ was adjusted so that the total of the Ni²⁺ ion concentration and the Al³⁺ ion concentration became 1 mol/L. While this mixture aqueous solution was intensively stirred, this mixture aqueous solution was dripped into the (NH₄)₂SO₄ aqueous solution. This (NH₄)₂SO₄ aqueous solution had a temperature of 45°C and a pH of 11 (the pH thereof was adjusted to 11 with a NaOH aqueous solution). This caused coprecipitation of Ni(OH)₂ and Al(OH)₃. In the coprecipitation reaction, almost all of the Ni and Al were precipitated. Therefore, [Al]/([Ni] + [Al]) in the positive electrode material can be controlled by the ratio of the preparation amount between NiSO₄ and Al₂(SO₄)₃. When the coprecipitation of Ni(OH)₂ and Al(OH)₃ is just required, the pH may be determined in a range allowing them to be precipitated. For increasing the tap density of the positive electrode material (the volume density of the positive electrode material after the tapping), the pH is preferably 10 or more and 12 or less, and particularly preferably 10.5 or more and 11.5 or less. Instead of NiSO₄, any water-soluble Ni salt may be used. Instead of Al₂(SO₄)₃, any water-soluble aluminum salt may be used. Before the coprecipitation of Ni(OH)₂ and Al(OH)₃, the Ni²⁺ ion may be changed into an ammine complex of the Ni²⁺ ion.

The precipitate obtained by filtering was subjected to water washing and drying. Thus, nickel hydroxide was obtained. In this crystallite of the nickel hydroxide, Al was held in solid solution. Then, α-Co(OH)₂ and powder of an oxide of the lanthanide element were mixed into the nickel hydroxide. Here, examples of the oxide of the lanthanide element include Yb₂O₃, Y₂O₃, Er₂O₃, Tm₂O₃, Lu₂O₃, Dy₂O₃, Tb₂O₃, and Gd₂O₃. Further, a positive electrode paste was obtained by mixing a carboxyl methylcellulose (CMC) aqueous solution of 1 mass% concentration and polytetrafluoroethylene (PTFE) into the mixture including the nickel hydroxide. In this specification, the lanthanide includes Y. As for the composition ratio of the solid part of the positive electrode paste, for example, nickel hydroxide in which aluminum is held in solid solution:α-Co(OH)₂:oxide of lanthanide element:PTFE + CMC = 88.5:10:1.0:0.5. The amounts of α-Co(OH)₂ and PTFE + CMC are constant unless otherwise stated. The concentration of aluminum held in solid solution in the nickel hydroxide and the kind and concentration of the lanthanide element were changed. On this occasion, the composition ratio of the positive electrode paste was made substantially constant by changing the amount of the nickel hydroxide.

A foamed nickel substrate with a thickness of 1.4 mm and a density of 320 g/m² per unit area was filled with the positive electrode paste so that the electrode capacity became 250 mAh. After the positive electrode paste was dried, the substrate was rolled. Thus, a sheet of the nickel electrode with a thickness of 0.4 mm was obtained. By cutting this sheet into a size of 40 mm x60 mm, the nickel electrode (positive electrode) of the alkaline storage battery was obtained.

For obtaining the alloy with a composition of Mm_{1.0}Ni_{4.0}Co_{0.7}Al_{0.3}Mn_{0.3} (Mm represents Mischmetal), the raw materials were mixed and a high-frequency inductive heating was carried out in an inert atmosphere. Thus, an alloy ingot was prepared. The alloy ingot was heated at 1000°C and then, pulverized to give a mean particle size of 50 µm. Thus, hydrogen storage alloy powder was obtained. Subsequently, this powder was mixed with a dispersion liquid of SBR (styrene butadiene rubber) and a methylcellulose (MC) aqueous solution. Thus, a hydrogen storage alloy paste was obtained. This paste was applied on a Fe substrate with a thickness of 45 µm plated with 1-µm-thick Ni. The paste was dried and the electrode sheet was thus obtained. This sheet was cut into a size of 45 mm x 65 mm. Consequently, a hydrogen storage alloy electrode (negative electrode) with an electrode capacity of 500 mAh or more was obtained.

A separator made of synthetic resin was disposed on each side of the nickel electrode. This nickel electrode was held between two hydrogen storage alloy electrodes and set in a container. As a reference electrode, an Hg/HgO electrode was provided. An alkaline electrolyte solution containing 6.8 mol/L of KOH was poured into the container until the electrode was sufficiently immersed. Thus, an open type cell was obtained. It was assumed the α-Co(OH)₂ particle could be precipitated again on the surface of the nickel hydroxide having aluminum in solid solution after the α-Co(OH)₂ particle in the nickel electrode was dissolved in the electrolyte solution. Consequently, the storage battery of Example 1 was obtained. This storage battery was initially charged for 15 hours at a current of 25 mA (0.1 ItA). It was assumed that during the initial charging, the α-Co(OH)₂ particle could be oxidized into an oxyhydroxide of Co. The storage battery was left stand for an hour after the initial charging, and then the storage battery was discharged at 0.2 It A (50 mA) until the positive electrode potential became equal to the potential of the reference electrode. This charge-exposure-discharge cycle was repeated five times for each battery at an ambient temperature of 20°C. This charge-standing-discharge cycle was a cycle of charging the storage battery at 0.1 ItA (25 mA) for 15 hours, leaving the battery standing for an hour, and allowing the battery to discharge at 0.2 ItA (50 mA) until the positive electrode potential could be equal to the potential of the reference electrode. The charging curve of the fifth cycle was measured.

A method of causing the Co hydroxide to be included in the positive electrode material by a powder mixing method preferably includes, if the method is employed in the industrial application, a step of coating the surface of the Ni hydroxide particle with the Co hydroxide through dissolving into the electrolyte solution and re-separation, and a step of oxidizing the Co hydroxide into a Co oxyhydroxide or the like. Practically, as disclosed in WO2006/064979, this method preferably includes coating the surface of the nickel hydroxide particle with cobalt hydroxide in advance and oxidizing the cobalt into the cobalt oxyhydroxide.

### Example 2 (simultaneous deposition method)

An alkaline storage battery was prepared in a manner similar to Example 1 except of the follows: Instead of mixing the powder of the oxide of the lanthanide with the nickel hydroxide in which aluminum was held in solid solution, a coprecipitation of Ni(OH)₂, Al(OH)₃, and lanthanide hydroxide Ln(OH)₃ (Ln represents a lanthanide element) was prepared. The lanthanide was added as a nitrate such as a hydrate of Yb(NO₃)₃. As a result, the storage battery of Example 2 was obtained. Here, the salt of lanthanide may be the salt which is water-soluble and precipitated when the pH is around 11.

### Definition and measurement method

"The composition of the positive electrode material" in this specification refers to the composition of the solid part of the positive electrode material that excludes the substrate after being extracted from the nickel electrode (positive electrode) and water-washed and dried. Nickel is present as the hydroxide in the discharged state and as the oxyhydroxide in the charged state. The mass ratio between the both is 91.7:92.7, which is almost 1:1. For strictly discussing the composition of the positive electrode material, the content of nickel is expressed herein in terms of bivalent hydroxide.

The content of the lanthanide element is expressed herein in terms of metal. The content of the lanthanide element in the positive electrode material can be obtained as follows, for example. First, the solid part of the positive electrode excluding the substrate is washed with water and dried. After that, the content of the lanthanide element in the positive electrode material can be obtained by, for example, ICP analysis. The lanthanide element may be present as a hydroxide or an oxide; however, the details are not clear. The content of the aluminum element and the content of the nickel element can be similarly measured by, for example, ICP analysis. Al, and Ga may be substituted for some of the nickel atoms by being formed into the solid solution in the crystallite of the nickel hydroxide or that Al, and Ga are formed into the solid solution between the layers of the nickel hydroxide. Note that some of Al, and Ga elements may be precipitated as hydroxide. The nickel hydroxide in which Al was held in solid solution was subjected to X-ray diffraction. As a result, the peak of (003) of α-phase in the vicinity of 10° to 12° and the peak of (001) of β-phase in the vicinity of 18° to 20° were confirmed. Further, the nickel hydroxide was subjected to selected area electron diffraction with a TEM (transmission electron microscope). From the diffraction spot image corresponding to a reciprocal lattice point appearing on a back focal surface, the crystal parameters such as interplanar spacing and plane orientation were calculated. Thus, the crystal phase present in one primary particle was identified. As a result, it has been confirmed that the α-phase and the β-phase were present. That is, it has been confirmed that the α-phase and the β-phase were present in the mixed state within one primary particle of the nickel hydroxide.

### Results

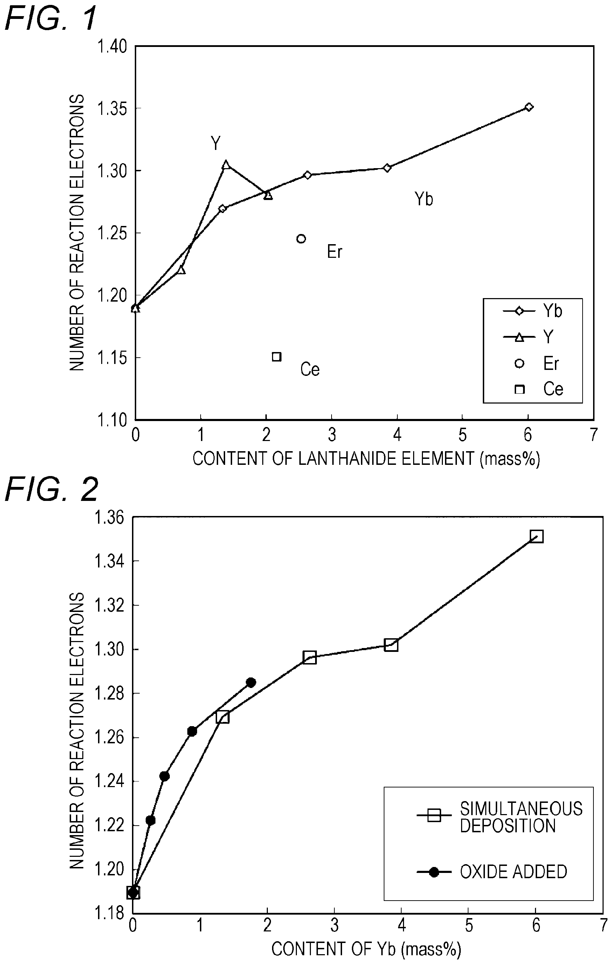

The results are shown in FIGS. 1 to 8. FIG. 1 represents the number of reaction electrons when the lanthanide element is included in the nickel hydroxide in which 10 mol% Al is held in solid solution, by a simultaneous deposition method. The number of reaction electrons was increased by the incorporation of Yb and Y. Further, the number of reaction electrons was increased by the incorporation of Er. However, the number of reaction electrons was decreased by the incorporation of Ce. The data on the content (calculated in terms of metal) of the lanthanide element in the positive electrode material and the number of reaction electrons per nickel atom are shown in Table 1.

**[Table 1]**

| Lanthanide element | Content in positive electrode material (mass%) | Number of reaction electrons per nickel atom |
|---|---|---|
| None | 0.0 | 1.19 |
| Yb | 1.3 | 1.27 |
| Yb | 2.6 | 1.30 |
| Yb | 3.8 | 1.30 |
| Yb | 6.0 | 1.35 |
| Y | 0.6 | 1.22 |
| Y | 1.25 | 1.30 |
| Y | 1.8 | 1.28 |
| Er | 2.5 | 1.25 |
| Ce | 2.2 | 1.15 |

FIG. 2 represents the number of reaction electrons when the Yb concentration is varied. On this occasion, the nickel hydroxide has 10 mol% of Al held in solid solution. In the powder mixing method, Yb was included in the nickel hydroxide in the range of 0.3 to 1.8 mass%. By the incorporation of Yb by 0.3 mass%, the number of reaction electrons was increased. Along with the increase in content of Yb to 0.5 mass%, 0.9 mass%, and 1.8 mass%, the number of reaction electrons was increased. In the simultaneous deposition method, Yb was included in the nickel hydroxide in the range of 1.5 to 6 mass%. Along with the increase in content of Yb, the number of reaction electrons was increased. FIG. 2 indicates that almost the same results were obtained either in the powder mixing method or the simultaneous deposition method. In other words, it was understood that the lanthanide element might be included in α-phase nickel hydroxide, γ-phase nickel oxyhydroxide, or the like. The effect of the lanthanide element lies in the increase in number of reaction electrons of nickel. The presence of lanthanide in the positive electrode leads to the increase in number of reaction electrons. The lanthanide is made present in, for example, nickel hydroxide or cobalt oxyhydroxide. In particular, the number of reaction electrons is increased drastically when the lanthanide is present, for example, within the particle of, or on the surface of the nickel hydroxide. The relationships between the content of Yb and the number of reaction electrons in the simultaneous deposition and the powder mixing are shown in Table 2. The content of Yb is the concentration in terms of metal in the positive electrode material.

**[Table 2]**

| Content of Yb (mass%) | Number of reaction electrons | |
|---|---|---|
| | Simultaneous deposition | Powder mixing |
| None | 1.19 | |
| 1.3 | 1.27 | |
| 2.6 | 1.30 | |
| 3.8 | 1.30 | |
| 6.0 | 1.35 | |
| 0.3 | | 1.22 |
| 0.5 | | 1.24 |
| 0.9 | | 1.26 |
| 1.8 | | 1.29 |

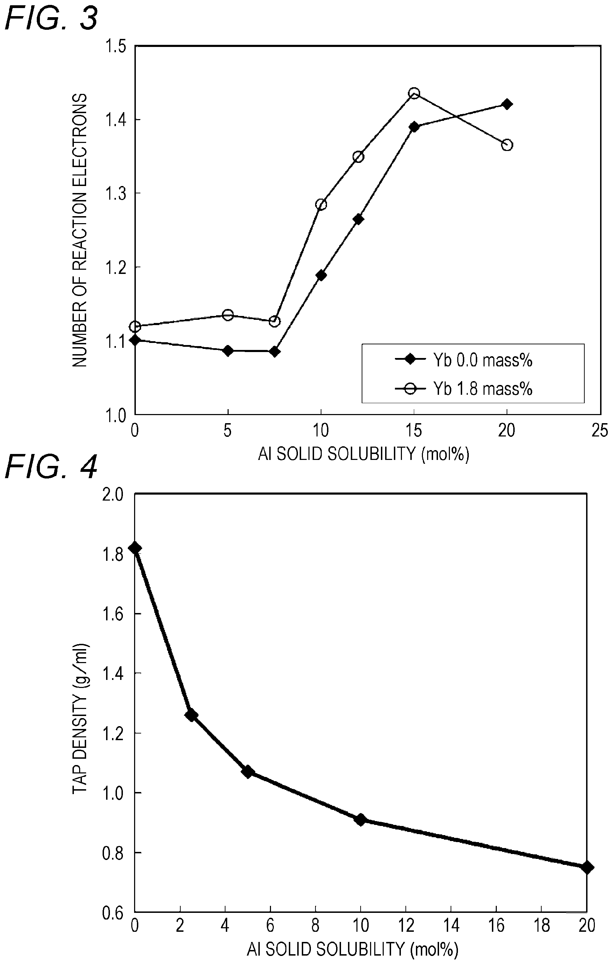

FIG. 3 represents the influence of the solid solubility of aluminum on the number of reaction electrons when 1.8 mass% of Yb is included by the powder mixing method in the nickel hydroxide in which Al is held in solid solution. Table 4 represents the number of reaction electrons in terms of true density. The number of reaction electrons in terms of true density is obtained by multiplying the number of reaction electrons by the true density of each sample. Here, the true density of each sample in the present application refers to the logical value calculated based on the presence ratio between the α-phase and the β-phase. In other words, in the case where the A element is not held in solid solution in the nickel hydroxide, the α-phase is not included in the nickel hydroxide. If the solid solubility of the A element in the nickel hydroxide is 20 mol%, the nickel hydroxide may be present entirely in the α-phase. Based on this assumption, the presence ratio of the α-phase of the nickel hydroxide is calculated from the solid solubility of the A element. Further, using the logical values of the known true densities of the α-phase and the β-phase, the true density of each sample was calculated.

When the solid solubility of aluminum is 5 to 15 mol%, the number of reaction electrons and the number of reaction electrons in terms of true density were able to be increased. That is, the effects that the number of reaction electrons of the positive active material was increased and the discharge capacity per volume of the positive electrode material were obtained. In particular, when the solid solubility of aluminum is 10 mol% and 15 mol%, the incorporation of Yb led to the drastic increase in number of reaction electrons. From FIG. 3, the effects of the present invention can be obtained until the solid solubility of aluminum reaches 16 mol%. However, when the solid solubility of aluminum was 0 mol%, the increase in number of reaction electrons became small and the effect of the present invention was not obtained. When the solid solubility of aluminum was 20 mol%, the incorporation of Yb led to the decrease in number of reaction electrons and the number of reaction electrons in terms of true density became 4.10 or less. Here, the results on Yb were shown. The results from other lanthanide elements such as Er or Y were similar to those of Yb. Thus, it was understood that the effect of the lanthanide element was obtained when the solid solubility of aluminum was in the range of 5 to 16 mol%. The effect of increasing the number of reaction electrons is largely different in the case where the solid solubility of aluminum is 7.5 mol% and 10 mol%. Thus, the solid solubility of aluminum is preferably 9 mol% or more. When the solid solubility of aluminum is 20 mol%, the number of reaction electrons is decreased due to Yb. Thus, the solid solubility of aluminum is preferably 15 mol% or less. When the solid solubility of aluminum is 12 mol%, the effect of increasing the number of reaction electrons twice as large as that when the solid solubility of aluminum is 15 mol% can be obtained. As depicted in FIG. 4 and Table 5, as the solid solubility of aluminum is increased, the tap density of the nickel hydroxide is decreased. Based on these, the solid solubility of aluminum is preferably 9 to 15 mol%, and the most preferably 9 to 12 mol%. The data of FIG. 3 are shown in Table 3.

**[Table 3]**

| Solid solubility of Al (mol%) | Number of reaction electrons | | Difference in number of reaction electrons |
|---|---|---|---|
| | Yb 0 mass% | Yb 1.8 mass% | |
| None | 1.10 | 1.12 | 0.02 |
| 5 | 1.09 | 1.13 | 0.04 |
| 7.5 | 1.09 | 1.13 | 0.04 |
| 10 | 1.19 | 1.29 | 0.10 |
| 12 | 1.27 | 1.35 | 0.09 |
| 15 | 1.39 | 1.44 | 0.05 |
| 20 | 1.42 | 1.37 | -0.06 |

**[Table 4]**

| Solid solubility of Al (mol%) | Number of reaction electrons in terms of true density |
|---|---|
| 5 | 4.16 |
| 10 | 4.38 |
| 15 | 4.47 |
| 20 | 3.86 |

FIG. 4 expresses the relationship between the tap density and the solid solubility of aluminum in the nickel hydroxide. The positive electrode material (nickel hydroxide) related to FIG. 4 does not contain the lanthanide element substantially. For measuring the tap density, a tap density measurer (RHK type) manufactured by KONISHI MFG CO., LTD. was used. A measuring cylinder of 10 ml content having the sample was dropped from a height of 5 cm for 200 times. After that, the tap density (volume density after the tapping) of the sample was measured. As the solid solubility of aluminum is increased, the tap density of the nickel hydroxide is decreased. The decrease in tap density refers to the decrease in discharge capacity per volume of the positive electrode material. A sample containing 2.6 mass% of Yb by the simultaneous deposition method led the similar result. The data of FIG. 4 are shown in Table 5.

**[Table 5]**

| Solid solubility of Al (mol%) | Tap density (g/ml) |
|---|---|
| None | 1.82 |
| 2.5 | 1.26 |
| 5 | 1.07 |
| 10 | 0.91 |
| 20 | 0.75 |

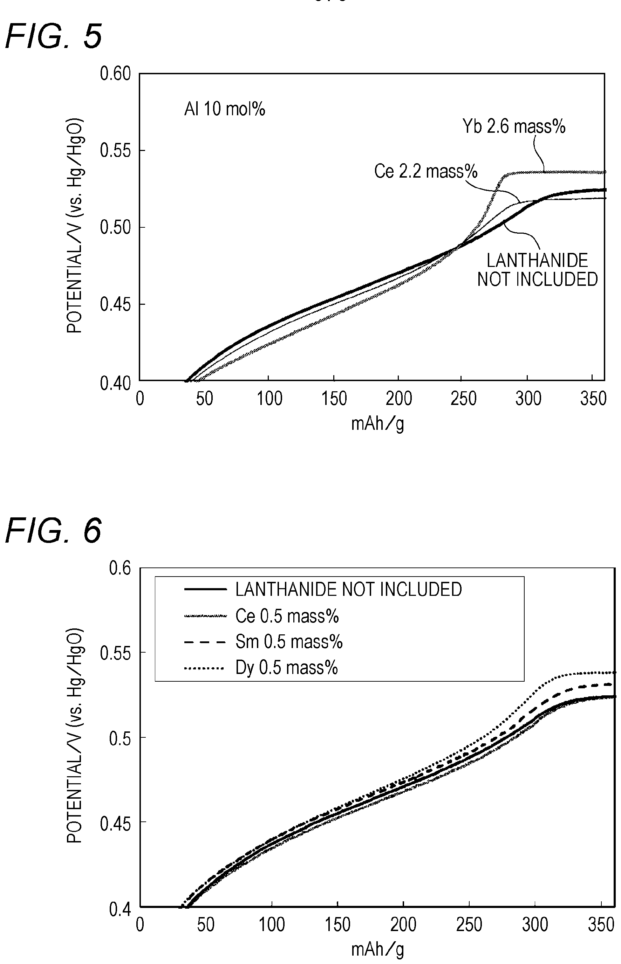

FIG. 5 represents the charging curves when the nickel hydroxide contains 2.6 mass% of Yb, contains 2.2 mass% of Ce, and does not contain lanthanide substantially. The solid solubility of aluminum in the nickel hydroxide is 10 mol%. The lanthanide element was included in the positive electrode material by the simultaneous deposition method. In FIG. 5, the horizontal axis represents the quantity of charged electricity and the vertical axis represents the potential of the positive electrode based on the reference electrode. When Yb was included, plateau was generated around a positive electrode potential of 530 mV. That is, here, the oxygen generation potential was on the rise. This means the nickel hydroxide can be oxidized with a higher electron number. In contrast to this, when Ce was included in the nickel hydroxide, the oxygen generation potential was not increased and the number of reaction electrons was slightly decreased. When Yb is included in the nickel hydroxide, the oxygen generation potential was increased. Thus, it is possible to assume that the number of reaction electrons is increased when the nickel hydroxide is oxidized into higher oxidation number during charging.

FIG. 6 expresses the charging curves when the nickel hydroxide contains Sm, Dy, and Ce by 1.0 mass% each, and when the nickel hydroxide does not contain lanthanide substantially. The solid solubility of aluminum in the nickel hydroxide is 10 mol%. The lanthanide element was included in the nickel hydroxide by the simultaneous deposition method. In FIG. 6, the horizontal axis represents the quantity of charged electricity and the vertical axis represents the potential of the positive electrode based on the reference electrode. FIG. 6 suggests that the oxygen generation potential is increased by Dy and Sm, particularly Dy, and that the number of reaction electrons is therefore increased.

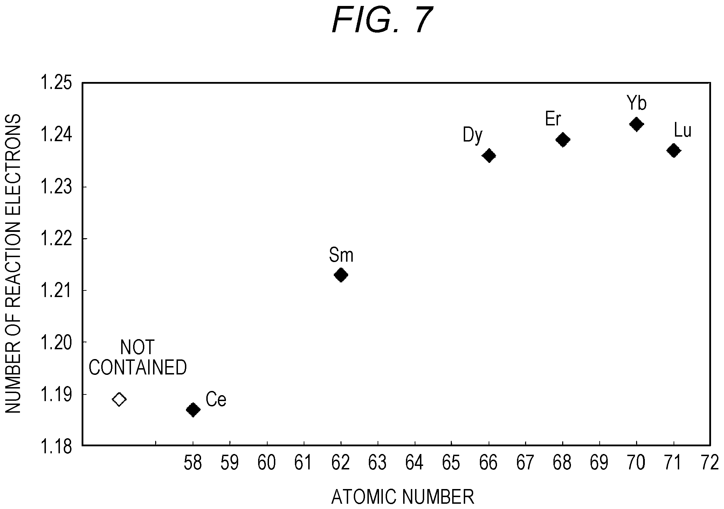

FIG. 7 expresses the relationship between the kind of the lanthanide element and the number of reaction electrons of nickel. The lanthanide element was included in the nickel hydroxide by the simultaneous deposition method. The content of the lanthanide element is 0.5 mass% in terms of metal. The measured temperature was 20°C. It is understood that the number of reaction electrons is increased when Sm-Lu is included in the positive electrode material. The results are shown in Table 6.

**[Table 6]**

| Lanthanide element | Number of reaction electrons |
|---|---|
| - | 1.189 |
| Ce | 1.187 |
| Sm | 1.213 |
| Dy | 1.236 |
| Er | 1.239 |
| Yb | 1.242 |
| Lu | 1.237 |

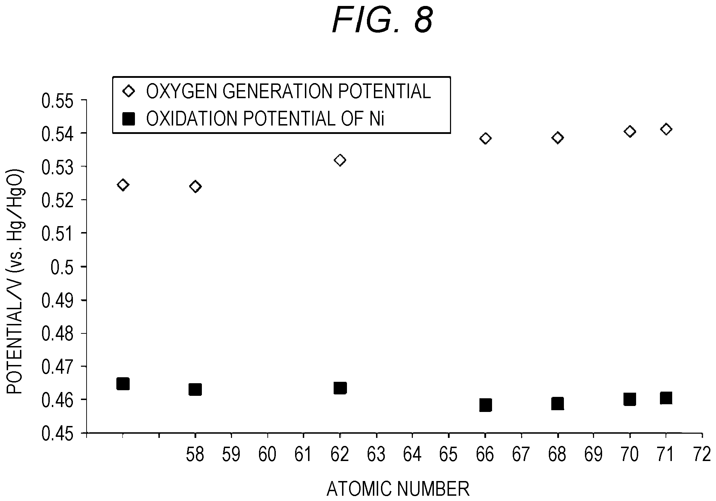

By the powder mixing method, 0.5 mass% of lanthanide element was included in the positive electrode material. The average oxidation potential of nickel and the oxygen generation potential in this case are shown in FIG. 8. The solid solubility of aluminum in the nickel hydroxide was 10 mol%. The measurement temperature was 20°C. The data shown in FIG. 8 are the data of the fifth cycle of the charging-standing-discharging cycle. As the atomic number increases from Sm to Lu, the difference between the average oxidation potential of nickel and the oxygen generation potential is increased. This indicates that as the atomic number of lanthanide to be included increases, the number of reaction electrons of nickel is increased. Therefore, the element to be included is, in a broad meaning, Y or any of lanthanide elements of atomic number 62 (Sm) to 71 (Lu). The element is, for example, Y or any of lanthanide elements of atomic number 66 (Dy), 67 (Ho), 68 (Er), 69 (Tm), 70 (Yb), and 71 (Lu). The element is particularly preferably Y or any of lanthanide elements of atomic number 68 (Er), 69 (Tm), 70 (Yb), and 71 (Lu). The data of FIG. 8 are shown in Table 7. Note that Table 7 expresses the data of FIG. 8 as the difference between the average oxidation potential of nickel and the oxygen generation potential.

**[Table 7]**

| Lanthanide element | Difference between oxygen generation potential and average oxidation potential of Ni (mV) |
|---|---|
| - | 60 |
| Ce | 63 |
| Sm | 70 |
| Dy | 80 |
| Er | 81 |
| Yb | 82 |
| Lu | 83 |

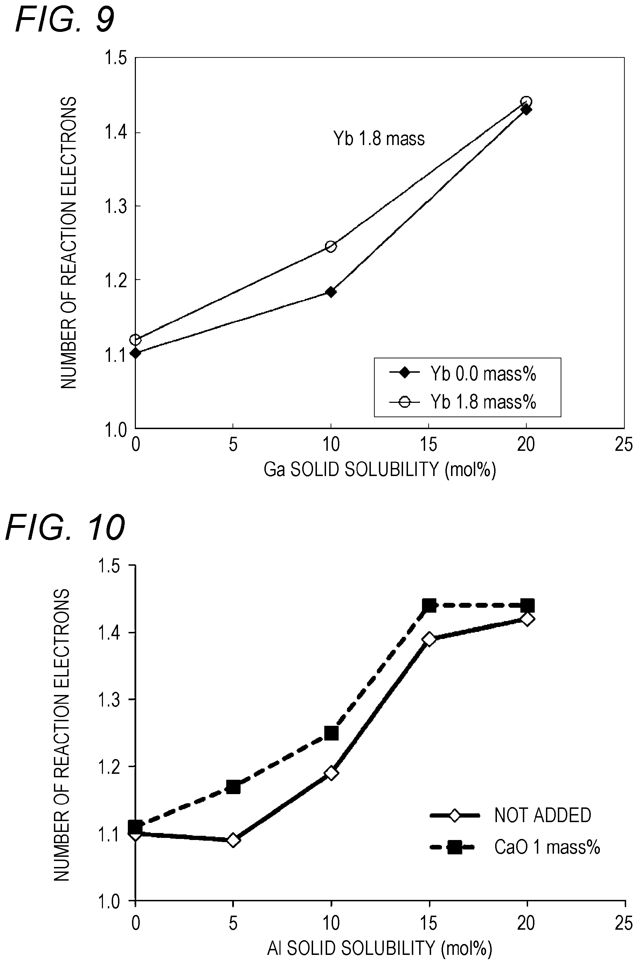

FIG. 9 represents the influence of the solid solubility of gallium held in solid solution in the nickel hydroxide on the number of reaction electrons. In FIG. 9, the nickel hydroxide containing 1.8 mass% of Yb by the powder mixing method and the nickel hydroxide that does not contain Yb substantially are compared. When the solid solubility of Ga is 10 mol%, the effect of Yb is increased so that the number of reaction electrons is drastically increased. When the solid solubility of Ga is 0 mol% or 20 mol%, the effect of Yb is lost. In other words, even though the element other than Al, such as Ga, is used, the effect of increasing the number of reaction electrons by the lanthanide element can be increased further by containing the A element as at least one element selected from the group consisting of Al, and Ga by 5 mol% or more and 16 mol% or less in the nickel hydroxide.

Examples have proved the following facts.
1) The number of reaction electrons of the positive electrode material of the alkaline storage battery can be increased when an oxide, a hydroxide, or the like of Y or any of lanthanide elements of atomic number 62 (Sm) to 71 (Lu) is included in the positive electrode material. The number of reaction electrons is drastically increased when the lanthanide element is Y or any of elements with atomic numbers of 66 to 71. The number of reaction electrons is increased particularly when the lanthanide element is Y or any of elements with atomic numbers of 68 to 71.
2) This effect is observed when the solid solubility of aluminum is 5 to 16 mol%. When the solid solubility of aluminum is 20 mol%, such an effect is not achieved substantially. If Al is not held in solid solution, the increase in number of reaction electrons is very small. The solid solubility of aluminum that can particularly increase the number of reaction electrons is 5 to 15 mol%, and the most preferably 9 to 12 mol%.
3) As the solid solubility of aluminum increases, the volume of the positive electrode material increases. Therefore, the solid solubility of aluminum may be 16 mol% or less, and is preferably 15 mol% or less and the most preferably 12 mol% or less.
4) The increase in number of reaction electrons by the lanthanide element is the maximum when the solid solubility of aluminum is 10 mol%. Thus, the solid solubility of aluminum may be 5 mol% or more, and is preferably 9 mol% or more.
5) When the content of the oxide or hydroxide of the lanthanide element in terms of metal is 0.25 mass% or more and 6 mass% or less, the effect of increasing the number of reaction electrons can be confirmed.
6) The effect of the lanthanide element is suddenly increased as the content of the lanthanide element is increased until the content of the lanthanide element reaches approximately 1.5 mass%. After that, the effect is increased as the content of the lanthanide element is increased until the content of the lanthanide element reaches approximately 3 mass%. Meanwhile, excessively containing the lanthanide element leads to the decrease in content of nickel. Thus, the content of the lanthanide element is preferably 0.4 mass% or more, and particularly preferably 0.5 mass% or more. The content of the lanthanide element is preferably 4 mass% or less, and particularly preferably 3 mass% or less.
7) The content of the lanthanide element is preferably 0.4 mass% or more and 4 mass% or less, and particularly preferably 0.5 mass% or more and 3 mass% or less.

### [Embodiment 2]

### Preparation of positive electrode material

A mixture aqueous solution including a hydrate of NiSO₄ and a hydrate of Al₂(SO₄)₃ was adjusted so that the total of the Ni²⁺ ion concentration and the Al³⁺ ion concentration became 1 mol/L. While this mixture aqueous solution was intensively stirred, this mixture aqueous solution was dripped into the (NH₄)₂SO₄ aqueous solution. This (NH₄)₂SO₄ aqueous solution had a temperature of 45°C and a pH of 11 (the pH was adjusted to 11 with the NaOH aqueous solution). This caused coprecipitation of Ni(OH)₂ and Al(OH)₃. The Al(OH)₃ particles do not separate out on the surface of the Ni(OH)₂ particles substantially. Instead, Al³⁺ ions of the Al(OH)₃ particles are taken into the Ni(OH)₂ particles and at least a part thereof is substituted for a Ni²⁺ ion. For example, in this specification, the expression of "3 mol% substitution of Al" refers to that the aluminum concentration is 3 mol% assuming that the total concentration of Al and Ni in the nickel hydroxide particles is 100 mol%. In the coprecipitation reaction, almost all of the Ni and Al are precipitated. Thus, the aluminum concentration of the nickel hydroxide can be controlled by the ratio of the preparation amount between NiSO₄ and Al₂(SO₄)₃. If Zn is further held in solid solution in the nickel hydroxide, for example, ZnSO₄ is added to the mixture aqueous solution of NiSO₄ and Al₂(SO₄)₃, so that Zn(OH)₂ is coprecipitated with Ni(OH)₂ and Al(OH)₃.

When just the coprecipitation of Ni(OH)₂ and Al(OH)₃ is necessary, the pH may be determined in the range of allowing the separation of those. For increasing the tap density of the positive electrode material (the volume density of the positive electrode material after the tapping), the pH is preferably 10 or more and 12 or less, and particularly preferably 10.5 or more and 11.5 or less. Instead of NiSO₄, any water-soluble Ni salt may be used. Instead of Al₂(SO₄)₃, any water-soluble aluminum salt may be used. Before the coprecipitation of Ni(OH)₂ and Al(OH)₃, the Ni²⁺ ion may be changed into an ammine complex of the Ni²⁺ ion.

The precipitate obtained by filtering was subjected to water washing and drying. Thus, nickel hydroxide was obtained. In this crystallite of the nickel hydroxide, Al is held in solid solution. Next, micropowder of a Ca compound or a Sr compound and micropowder of a Co compound such as α-Co(OH)₂ were mixed into the nickel hydroxide. In this example, CaO or SrO was used as the Ca compound or the Sr compound, respectively. As the Ca compound or the Sr compound, Ca(OH)₂ or Sr(OH)₂ may alternatively be used, respectively. Further, a positive electrode paste was obtained by mixing a carboxyl methylcellulose (CMC) aqueous solution of 1 mass% concentration and polytetrafluoroethylene (PTFE) into the mixture including the nickel hydroxide. The content of the calcium compound and the strontium compound is expressed by the conversion into an oxide thereof. In the experiment, the content of the calcium compound and the strontium compound was changed in the range of 0.3 mass% or more and 5 mass% or less assuming that the entire positive electrode material is 100 mass%. As for the composition of the positive electrode paste, for example, nickel hydroxide:α-Co(OH)₂ = 90:10. Assuming that these including the calcium compound and the strontium compound additionally are 100 mass%, PTFE + CMC (solid part) corresponds to, for example, 0.5 mass% in total. The mode of the calcium compound and the strontium compound at the time of the addition may be arbitrary. A foamed nickel substrate with a thickness of 1.4 mm and a density of 320 g/m² per unit area was filled with the positive electrode paste so that the electrode capacity of the storage battery became 250 mAh. After the positive electrode paste was dried, the substrate was rolled. Thus, a sheet of the nickel electrode with a thickness of 0.4 mm was obtained. By cutting this sheet into a size of 40 mm x60 mm, the nickel electrode (positive electrode) of the alkaline storage battery was obtained.

For obtaining the alloy with a composition of Mm_{1.0}Ni_{4.0}Co_{0.7}Al_{0.3}Mn_{0.3} (Mm represents Mischmetal), the raw materials were mixed and a high-frequency inductive heating was carried out in an inert atmosphere. Thus, an alloy ingot was prepared. The alloy ingot was heated at 1000°C and then, pulverized to give a mean particle size of 50 µm. Consequently, hydrogen storage alloy powder was obtained. This powder was mixed with a dispersion liquid of SBR (styrene butadiene rubber) and a methylcellulose (MC) aqueous solution. Thus, a hydrogen storage alloy paste was obtained. This paste was applied and dried on a Fe substrate with a thickness of 45 µm plated with 1-µm-thick Ni, thereby providing an electrode sheet. This sheet was cut into a size of 45 mm x 65 mm. Thus, a hydrogen storage alloy electrode (negative electrode) with an electrode capacity of 500 mAh or more was obtained.

A separator made of synthetic resin was disposed on each side of the nickel electrode. This nickel electrode was sandwiched between two hydrogen storage alloy electrodes and set in a container. As a reference electrode, an Hg/HgO electrode was provided. An alkaline electrolyte solution containing 6.8 mol/L of KOH was poured into the container until the electrode was sufficiently immersed. Thus, an open type cell was obtained. After the α-Co(OH)₂ particle in the nickel electrode is dissolved in the electrolyte solution, the particle is precipitated on the surface of the nickel hydroxide again. The cell was initially charged for 15 hours at a current of 25 mA (0.1 ItA). It is assumed that during the initial charging, α-Co(OH)₂ is oxidized into Co oxyhydroxide.

After the initial charging, the alkaline storage battery was left stand for an hour. After that, the alkaline storage battery was discharged at 0.2 ItA (50 mA) until the positive electrode potential became equal to the potential of the reference electrode. Next, the alkaline storage battery was charged for 15 hours at a current of 0.1 ItA. This charge-standing-discharge cycle was repeated five times for each battery at an ambient temperature of 20°C. From the quantity of discharged electricity of the fifth cycle, the number of reaction electrons per nickel atom was measured. From the charging curve of the fifth cycle, the oxygen generation potential was measured.

As described in Example, a method of causing the Co hydroxide to be included in the positive electrode material by a powder mixture method preferably includes a step of coating the surface of the Ni hydroxide particle with the Co hydroxide through dissolving into the electrolyte solution and re-separation, and a step of oxidizing the Co hydroxide into a Co oxyhydroxide. Practically, as disclosed in WO2006/064979, this method preferably includes coating the surface of the nickel hydroxide particle with cobalt hydroxide in advance and oxidizing the cobalt hydroxide into the cobalt oxyhydroxide.

The composition of the positive electrode material can be known from, for example, ICP analysis. Al, and Ga are present in the nickel hydroxide particle and substituted by the nickel atom or are held in solid solution between the layers of the nickel hydroxide. There is a possibility that Al, and Ga are partly precipitated as free aluminum hydroxide or the like. The nickel hydroxide was subjected to the X-ray diffraction. As a result, the peak of (003) of α-phase in the vicinity of 10° to 12° and the peak of (001) of β-phase in the vicinity of 18° to 20° were confirmed. Further, the nickel hydroxide was subjected to selected area electron diffraction with a TEM (transmission electron microscope). From the diffraction spot image corresponding to a reciprocal lattice point appearing on a back focal surface, the crystal parameters such as interplanar spacing and plane orientation were calculated. Thus, the crystal phase present in one primary particle was identified. As a result, it has been confirmed that the α-phase and the β-phrase were present. In other words, it has been confirmed that the a-phase and the β-phase were present in the mixed state within one primary particle. The α-phase nickel hydroxide was oxidized by the charging to be γ-phase nickel oxyhydroxide. The β-phase nickel hydroxide was oxidized by the charging to be β-phase nickel oxyhydroxide.

### Results

The results are shown in FIG. 10 to FIG. 15 and in Table 8 to Table 12. FIG. 10, Table 8, and Table 9 express the number of reaction electrons and the number of reaction electrons in terms of true density when the solid solubility of aluminum is changed in the positive electrode material containing 1 mass% of CaO and the positive electrode material not containing CaO. The number of reaction electrons in terms of true density is obtained by multiplying the number of reaction electrons by the true density of each sample. Here, the true density of each sample in the present application refers to the logical value calculated based on the presence ratio between the α-phase and the β-phase. In other words, in the case where the A element is not held in solid solution in the nickel hydroxide, the α-phase is not included in the nickel hydroxide. If the solid solubility of the A element in the nickel hydroxide is 20 mol%, the nickel hydroxide is assumed to be present entirely in the α-phase. Based on this assumption, the presence ratio of the α-phase of the nickel hydroxide is calculated from the solid solubility of the A element. Further, using the logical values of the known true densities of the α-phase and the β-phase, the true density of each sample was calculated logically. When the solid solubility of aluminum was 0 mol%, the CaO compound did not provide the effect of increasing the number of reaction electrons substantially. When the solid solubility of aluminum was 5 mol%, CaO largely increased the number of reaction electrons. As the solid solubility of aluminum was increased after that, the increase in number of reaction electrons due to CaO became small. When the solid solubility of aluminum was 20 mol%, the increase in number of reaction electrons became very small. While the solid solubility of aluminum was in the range of 5 to 15 mol%, the number of reaction electrons in terms of true density exceeded 4.10. In other words, while the solid solubility of aluminum was in the range of 5 to 15 mol%, the effects were obtained that the number of reaction electrons in the positive electrode material was increased and the discharge capacity per volume of the positive electrode material was increased. It is assumed from FIG. 10 that the effect of the present embodiment can be obtained until the solid solubility of aluminum reaches 16 mol%. Even when SrO was used instead of CaO, the dependency of the number of reaction electrons on the aluminum content, which is similar to the case of CaO, was observed.

**[Table 8]**

| The change in number of reaction electrons depending on the presence or absence of CeO | | | |
|---|---|---|---|
| Solid solubility of Al (mol%) | Number of reaction electrons (containing CeO) | Number of reaction electrons (not containing CeO) | Difference in number of reaction electrons (number in the presence of CeO - number in the absence of CeO) |
| 0 | 1.11 | 1.10 | 0.01 |
| 5 | 1.17 | 1.09 | 0.08 |
| 10 | 1.25 | 1.19 | 0.06 |
| 15 | 1.44 | 1.39 | 0.05 |
| 20 | 1.44 | 1.42 | 0.02 |

| | | | |
|---|---|---|---|
| * The solid solubility of aluminum is represented in the unit of % by [Al]/([Al] + [Ni]) in the positive electrode material. * The calcium compound is included by 1 mass% in terms of CaO relative to 100 mass% of the positive electrode material. | | | |

**[Table 9]**

| Solid solubility of Al (mol%) | Number of reaction electrons in terms of true density |
|---|---|
| 5 | 4.31 |
| 10 | 4.24 |
| 15 | 4.47 |
| 20 | 4.06 |

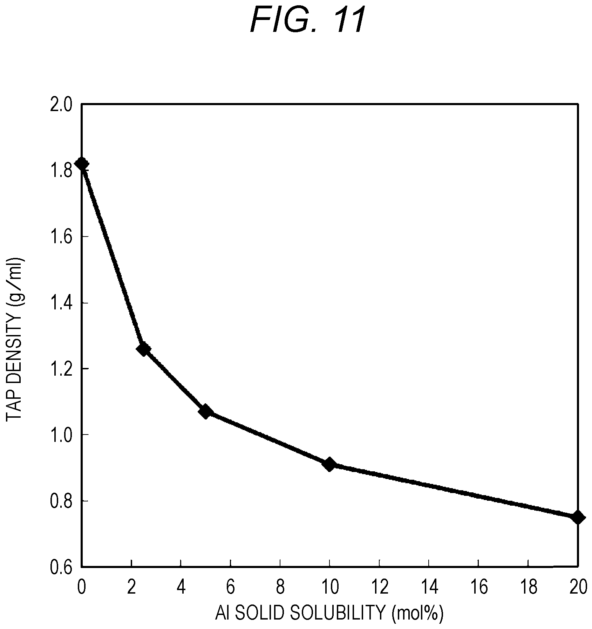

FIG. 11 and Table 10 express the relationship between the tap density and the solid solubility of aluminum. In the positive electrode material (nickel hydroxide) related to FIG. 11 and Table 10, the Zn element is not held in solid solution. For measuring the tap density, a tap density measurer (RHK type) manufactured by KONISHI MFG CO., LTD. was used. A measuring cylinder of 10 ml content having the sample was dropped from a height of 5 cm for 200 times. After that, the tap density (volume density after the tapping) of the sample was measured. As the solid solubility of aluminum is increased, the tap density of the nickel hydroxide is decreased. The decrease in tap density refers to the decrease in discharge capacity per volume of the positive electrode material. Based on FIG. 10 and FIG. 11, it is understood that the solid solubility of aluminum is preferably 5 mol% or more, more preferably 7 mol% or more, and particularly preferably 8 mol% or more. The solid solubility of aluminum is preferably 16 mol% or less, more preferably 15 mol% or less, and particularly preferably 12 mol% or less.

**[Table 10]**

| Solid solubility of aluminum and tap density | |
|---|---|
| Solid solubility of Al (mol%) | Tap density (g/ml) |
| 0 | 1.82 |
| 2.5 | 1.26 |
| 5 | 1.07 |
| 10 | 0.91 |
| 20 | 0.75 |

| | |
|---|---|
| * The solid solubility of aluminum is represented in the unit of % by [Al]/([Al] + [Ni]) in the positive electrode material. | |

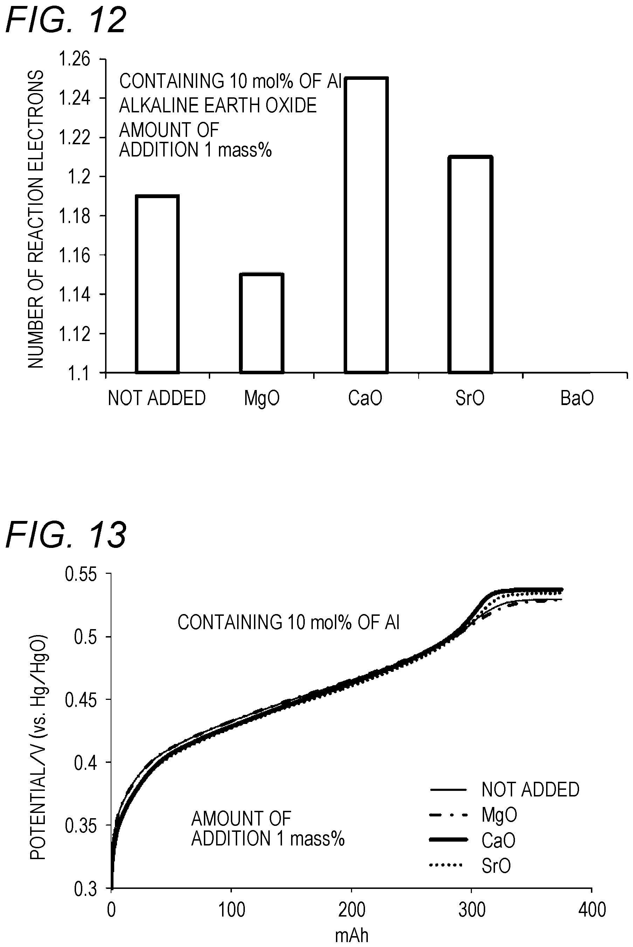

FIG. 12 and Table 11 express the number of reaction electrons that depends on the kind of alkaline earth element. The solid solubility of aluminum in the positive electrode material (nickel hydroxide) related to FIG. 12 and Table 11 is 10 mol%, and the content of the alkaline earth compound is 1 mass%. CaO and SrO provide the effect of increasing the number of reaction electrons. MgO and BaO did not provide the substantial effect.

**[Table 11]**

| The kind of alkaline earth compound and the number of reaction electrons | | | | |
|---|---|---|---|---|
| Free of alkaline earth compound | MgO | CaO | SrO | BaO |
| 1.19 | 1.15 | 1.25 | 1.21 | 1.19 |

| | | | | |
|---|---|---|---|---|
| * The aluminum concentration of the nickel hydroxide is 10 mol%. | | | | |

FIG. 13 represents the charging curves (the fifth cycle) when 1 mass% of CaO, SrO, or MgO is included in the nickel hydroxide containing 10 mol% of Al. In a region where the quantity of charged electricity is 300 mAh or more and the charging voltage becomes flat, oxygen is generated during the charging. In this region, CaO and SrO facilitate the oxidation of the nickel hydroxide by increasing the oxygen generation potential. It is understood that MgO does not provide such an effect substantially.

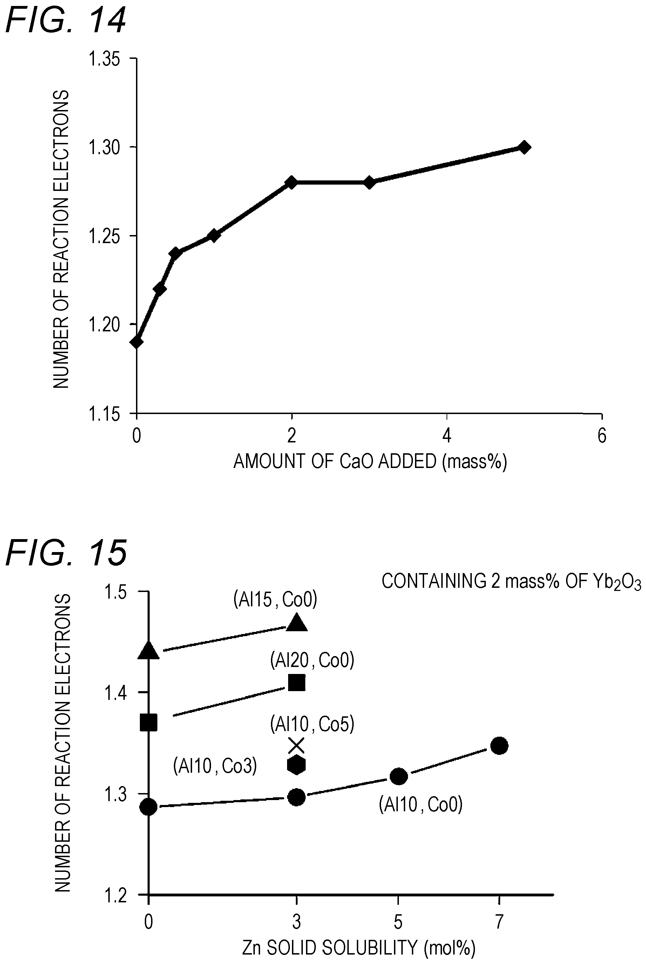

FIG. 14 and Table 12 show the effect of the content of CaO on the nickel hydroxide in which the solid solubility of aluminum is 10 mol%. Almost the same tendency was observed when the solid solubility of aluminum was changed to 5 mol%. Further, almost the same tendency was observed when CaO was replaced by SrO. The number of reaction electrons increases as the CaO concentration increases. The number of reaction electrons is suddenly increased as the CaO concentration increases until the CaO concentration reaches 1 mass%. When the CaO concentration has exceeded 1 mass%, the rate of increase in number of reaction electrons relative to the increase in CaO concentration becomes small. This means the rate of increase in number of reaction electrons becomes optimum when the content of CaO is approximately 1 mass%. The concentration dependency similar to that in the case of CaO was observed when SrO was used instead of CaO. Thus, it was understood that the optimal value of the content of SrO was approximately 1 mass%. The increase in number of reaction electrons has been confirmed when the total content of CaO and SrO is in the range of 0.3 mass% to 5 mass%. Thus, the total content of CaO and SrO is preferably 0.2 mass% or more, more preferably 0.3 mass% or more, and particularly preferably 0.5 mass% or more. Further, the total content of CaO and SrO is preferably 5 mass% or less, more preferably 3 mass% or less, and particularly preferably 2 mass% or less. As for the range including the upper and lower limits, the total content of CaO and SrO is preferably 0.2 mass% or more and 5 mass% or less, more preferably 0.3 mass% or more and 3 mass% or less, and the most preferably 0.5 mass% or more and 2 mass% or less.

**[Table 12]**

| The content of CaO and the number of reaction electrons | |
|---|---|
| CaO concentration (mass%) | Number of reaction electrons |
| 0 | 1.19 |
| 0.3 | 1.22 |
| 0.5 | 1.24 |
| 1.0 | 1.25 |
| 2.0 | 1.28 |
| 3.0 | 1.28 |
| 5.0 | 1.30 |

| | |
|---|---|
| * The Al concentration of the positive electrode material is 10 mol%. | |

In Example, the aluminum atom is held in solid solution in the nickel hydroxide. Thus, the α-Ni(OH)₂ can be stabilized and α-Ni(OH)₂ and β-Ni(OH)₂ can be present in the mixed state. Additionally, it is known that the α-Ni(OH)₂ can be stabilized in the nickel hydroxide in which manganese is held in solid solution, the nickel hydroxide in which gallium is held in solid solution, and the nickel hydroxide in which molybdenum is held in solid solution. Therefore, the nickel hydroxide in which the aluminum atom is held in solid solution may be replaced by the nickel hydroxide in which the manganese atom is held in solid solution, the nickel hydroxide in which the gallium atom is held in solid solution, or the nickel hydroxide in which the molybdenum atom is held in solid solution. The total concentration of the Al, and Ga elements is preferably 5 to 16 mol% relative to the total amount of the Ni element and these elements.

As the electrolyte solution, the NaOH aqueous solution, the aqueous solution of a mixture of NaOH and KOH, the aqueous solution of a mixture of LiOH and KOH, or the like may be used instead of the KOH aqueous solution. Thus, the oxygen generation potential of the positive electrode is increased. The most preferable electrolyte solution is the NaOH aqueous solution and the aqueous solution of a mixture of LiOH and KOH.

FIG. 15 and Table 13 represent the number of reaction electrons in the case where the hydroxide of Zn or Co is further coprecipitated at the precipitation of the nickel hydroxide containing Al. Here, Yb₂O₃ of 2 mass% relative to the solid part of the positive electrode excluding the substrate was used as the oxide of the lanthanide added to the positive electrode material. By the interaction among Zn, lanthanide, etc., the number of reaction electrons was further increased. The measurement of the charging curves proved that the lanthanide compound such as Yb₂O₃ facilitated the oxidation of Ni by increasing the oxygen generation potential in the positive electrode.

**[Table 13]**

| Al (mass%) | Zn (mass%) | Co (mass%) | Lanthanide oxide (mass%) | Number of reaction electrons | Number of reaction electrons in terms of true density |
|---|---|---|---|---|---|
| 10 | 0 | 0 | 2 | 1.29 | 4.38 |
| 10 | 3 | 0 | 2 | 1.30 | 4.41 |
| 10 | 5 | 0 | 2 | 1.32 | 4.48 |
| 10 | 7 | 0 | 2 | 1.35 | 4.58 |
| 15 | 0 | 0 | 2 | 1.44 | 4.47 |
| 15 | 3 | 0 | 2 | 1.47 | 4.57 |
| 20 | 0 | 0 | 2 | 1.37 | 3.86 |
| 20 | 3 | 0 | 2 | 1.41 | 3.98 |
| 10 | 3 | 3 | 2 | 1.33 | 4.52 |
| 10 | 3 | 5 | 2 | 1.35 | 4.58 |

The number of reaction electrons is further increased when Zn is further held in solid solution in the nickel hydroxide. The solid solubility of zinc in the nickel hydroxide is preferably 10 mol% or less, and particularly preferably 7 mol% or less. Further, the hydroxide of Co can be precipitated at the same time when the nickel hydroxide is precipitated. This makes it possible to dissolve Co in solid solution in the nickel hydroxide. In the nickel hydroxide in which Co is held in solid solution, the average oxidation potential of Ni is decreased. Therefore, the number of reaction electrons is increased. The amount of Co held in solid solution in the nickel hydroxide particle, i.e., the amount of Co held in solid solution excluding the Co compound attached to the surface of the nickel hydroxide is preferably 6 mol% or less. When the lanthanide compound is further included in the positive electrode material, the oxygen generation potential is increased, thereby increasing the number of reaction electrons. The lanthanide is preferably Y or any of lanthanides with atomic numbers of 62 (Sm) to 71 (Lu). The content of the lanthanide is preferably 6 mass% or less, for example. The content of aluminum in solid solution in the nickel hydroxide may be, for example, 5 to 16 mol%, and the solid solubility of zinc may be 1 to 10 mol%. Preferably, the solid solubility of aluminum is, for example, 9 to 15 mol%, and the solid solubility of zinc is 2 to 8 mol%. Particularly preferably, the solid solubility of aluminum is, for example, 9 to 15 mol%, and the content of zinc in solid solution is 3 to 7 mol%. The most preferably, the solid solubility of aluminum is, for example, 9 to 12 mol%, and the solid solubility of zinc is 3 to 7 mol%.

Examples have proved the following facts.
1) The number of reaction electrons is increased when the Ca compound or the Sr compound is included in the nickel hydroxide in which Al is held in solid solution and which includes α-phase nickel hydroxide and β-phase nickel hydroxide.
2) The increase in number of reaction electrons is very small when the Ca compound or the Sr compound is included in the nickel hydroxide in which Al is not held in solid solution.
3) The number of reaction electrons is largely increased when the Ca compound or the Sr compound is included in the nickel hydroxide in which Al is held in solid solution by 5 mol% or more and 15 mol% or less.
4) In consideration of the decrease in tap density of the nickel hydroxide along with the increase in solid solubility of aluminum, and the number of reaction electrons, the optimal value of the solid solubility of aluminum is approximately 10 mol%.
5) The optimal total content of CaO and SrO is approximately 1 mass%. The total content of CaO and SrO is preferably 0.2 mass% or more and 5 mass% or less, more preferably 0.3 mass% or more and 3 mass% or less, and the most preferably 0.5 mass% or more and 2 mass% or less.
6) Even though MgO or BaO is included in the nickel hydroxide instead of CaO, the number of reaction electrons is not increased substantially.

### Supplement

In Example, α-Ni(OH)₂ is stabilized by dissolving Al in solid solution in the nickel hydroxide. Therefore, α-Ni(OH)₂ and β-Ni(OH)₂ can be present in the mixed state. It is known that, additionally, α-Ni(OH)₂ and β-Ni(OH)₂ can be present in the mixed state stably even when the nickel hydroxide incorporates Ga in solid solution. Therefore, the nickel hydroxide incorporating Ga in solid solution, may be used instead of the nickel hydroxide incorporating Al in solid solution. The concentration of Ga element is preferably 5 to 16 mol% relative to the total amount of the nickel element and the Ga element.

It is more preferable that, in addition to the compound of the lanthanide element, the compound of at least one element selected from the group consisting of Zn, Co, Ca, and Sr is included in the nickel hydroxide in which aluminum is held in solid solution. Zn increases the oxygen generation potential in the nickel hydroxide. For example, ZnO, Zn(OH)₂, or the like may be included in the positive electrode material by the powder mixing method. The content of Zn may be, for example, 1 to 10 mol%, and is preferably 4 to 8 mol%, assuming that the total amount of [Zn] + [Al] + [Ni] is 100 mol%. In the case of the nickel hydroxide in which aluminum is not held in solid solution, Zn decreases the number of reaction electrons. In contrast to this, when the nickel hydroxide contains 5 to 16 mol% of Al relative to the total amount of [Zn] + [Al] + [Ni], the number of reaction electrons increases along with the increase of [Zn]. In particular, the incorporation of the zinc element increases the number of reaction electrons by approximately 0.03 to 0.06 when the nickel hydroxide containing 5 to 16 mol% of Al relative to the total amount of [Zn] + [Al] + [Ni] incorporates 4 to 8 mol% of Zn in solid solution and moreover when the positive electrode material contains 0.9 to 6 mass% in terms of metal of the compound of Y or any of the lanthanide elements of atomic number 62 to 71.

When Co is, for example, held in solid solution in the nickel hydroxide, the average oxidation potential of nickel is decreased. Therefore, if Co is included in the positive electrode material, Co is preferably coprecipitated as the Co hydroxide together with the aluminum element and the Ni element. The content of Co may be, for example, 1 to 6 mol%, and is preferably 4 to 6 mol% relative to the total amount of [Co] + [Al] + [Ni]. [Al] may be 5 to 16 mol% relative to the total amount of [Co] + [Al] + [Ni]. In the positive electrode material mainly containing the nickel hydroxide in which 4 to 6 mol% of Co is held in solid solution and containing 0.9 to 6 mass% in terms of metal of the compound of Y or any of the lanthanide elements of atomic number 62 to 71, the number of reaction electrons increases by approximately 0.04.

As the electrolyte solution, the NaOH aqueous solution, the aqueous solution of a mixture of NaOH and KOH, or the aqueous solution of a mixture of LiOH and KOH may be used instead of the KOH aqueous solution. Thus, the oxygen generation potential in the positive electrode is increased. The most preferable electrolyte solution is the NaOH aqueous solution and the aqueous solution of a mixture of LiOH and KOH. An embodiment of the present invention may be the following first to fourth positive electrode materials for an alkaline storage battery and the following first alkaline storage battery.

The first positive electrode material for an alkaline storage battery includes: nickel hydroxide in which an A element as at least one element selected from the group consisting of Al, and Ga is held in solid solution in a crystallite of the nickel hydroxide, the content of the A element, [A]/([Ni] + [A]), is 5% or more and 16% or less, and α-phase nickel hydroxide and β-phase nickel hydroxide are present in the mixed state; and at least one of a Sr compound, a Ca compound, and a compound of at least one element selected from the group consisting of Y and lanthanide elements of atomic number 62 (Sm) to 71 (Lu) (where [A] represents the molarity of the A element in the crystallite and [Ni] represents the molarity of Ni).

The second positive electrode material for an alkaline storage battery is the first positive electrode material for an alkaline storage battery, in which the compound of at least one element selected from the group consisting of Y and lanthanide elements of atomic number 62 (Sm) to 71 (Lu) is included by 0.25 mass% or more and 6 mass% or less in terms of metal relative to 100 mass% of a solid part.

The third positive electrode material for an alkaline storage battery is the first or second positive electrode for an alkaline storage battery, in which the compound of Ca or Sr is included by 0.2 mass% or more and 5 mass% or less relative to the nickel hydroxide.

The fourth positive electrode material for an alkaline storage battery is the third positive electrode material for an alkaline storage battery, in which Co is further held in solid solution in the crystallite of the nickel hydroxide.

The first alkaline storage battery includes: a positive electrode containing any of the first to fourth positive electrode materials for an alkaline storage battery; a negative electrode; and an alkaline electrolyte solution.

## Claims

1. A positive electrode material for an alkaline storage battery, comprising:
nickel hydroxide; and
at least one of a Sr compound, a Ca compound, and a compound of at least one element selected from the group consisting of Y and lanthanide elements of atomic number 62 (Sm) to 71 (Lu), **characterized in that**
an A element as at least one element selected from the group consisting of Al, and Ga is held in solid solution in a crystallite of the nickel hydroxide;
the content of the A element, [A]/([Ni] + [A]), is 5% or more and 16% or less (where [A] represents the molarity of the A element and [Ni] represents the molarity of Ni in the crystallite); and
the nickel hydroxide includes α-phase nickel hydroxide and β-phase nickel hydroxide.

2. The positive electrode material for an alkaline storage battery according to claim 1, wherein the compound of at least one element selected from the group consisting of Y and lanthanide elements of atomic number 62 (Sm) to 71 (Lu) is included by 0.25 mass% or more and 6 mass% or less in terms of metal relative to 100 mass% of a solid part of the positive electrode material.

3. The positive electrode material for an alkaline storage battery according to claim 1 or 2, wherein a compound of at least one of Ca and Sr is included by 0.2 mass% or more and 5 mass% or less relative to 100 mass% of the positive electrode material.

4. The positive electrode material for an alkaline storage battery according to any one of claims 1 to 3, wherein Co is further held in solid solution in the crystallite of the nickel hydroxide.

5. The positive electrode material for an alkaline storage battery according to any one of claims 1 to 4, wherein
Zn is further held in solid solution in the crystallite in the nickel hydroxide;
[A]/([Ni] + [A] + [Zn]) is 5 to 16 % (where [A] represents the molarity of the A element, [Ni] represents the molarity of nickel, and [Zn] represents the molarity of zinc in the crystallite); and
[Zn]/([Ni] + [A] + [Zn]) is 1 to 10%.

6. An alkaline storage battery comprising:
a positive electrode containing the positive electrode material for an alkaline storage battery according to any one of claims 1 to 5;
a negative electrode; and
an alkaline electrolyte solution.

## Patentansprüche

1. Positivelektrodenmaterial für eine Alkali-Speicherbatterie, umfassend:
Nickelhydroxid; und
eine Sr-Verbindung, eine Ca-Verbindung und/oder eine Verbindung von mindestens einem Element ausgewählt aus der Gruppe bestehend aus Y und Lanthaniden-Elementen mit der Ordnungszahl 62 (Sm) bis 71 (Lu),
**dadurch gekennzeichnet, dass**
ein Element A als mindestens ein Element, ausgewählt aus der Gruppe bestehend aus Al und Ga, in fester Lösung in einem Kristalliten des Nickelhydroxids gehalten wird;
der Anteil des Elements A, [A]/([Ni] + [A]), 5 % oder mehr und 16 % oder weniger ist (wobei [A] die Molarität des Elements A darstellt und [Ni] die Molarität von Ni im Kristalliten darstellt); und
das Nickelhydroxid α-Phasen-Nickelhydroxid und β-Phasen-Nickelhydroxid aufweist.

2. Positivelektrodenmaterial für eine Alkali-Speicherbatterie nach Anspruch 1, wobei die Verbindung von mindestens einem Element, ausgewählt aus der Gruppe bestehend aus Y und Lanthaniden-Elementen mit der Ordnungszahl 62 (Sm) bis 71 (Lu), zu 0,25 Masse-% oder mehr und 6 Masse-% oder weniger bezüglich Metall relativ zu 100 Masse-% eines festen Teils des Positivelektrodenmaterials enthalten ist.

3. Positivelektrodenmaterial für eine Alkali-Speicherbatterie nach Anspruch 1 oder 2, wobei eine Verbindung von Ca und/oder Sr zu 0,2 Masse-% oder mehr und 5 Masse-% oder weniger relativ zu 100 Masse-% des Positivelektrodenmaterials enthalten ist.

4. Positivelektrodenmaterial für eine Alkali-Speicherbatterie nach einem der Ansprüche 1 bis 3, wobei Co ferner in fester Lösung in dem Kristalliten des Nickelhydroxids enthalten ist.

5. Positivelektrodenmaterial für eine Alkali-Speicherbatterie nach einem der Ansprüche 1 bis 4, wobei Zn ferner in fester Lösung in dem Kristalliten in dem Nickelhydroxid enthalten ist;
[A]/([Ni] + [A] + [Zn]) 5 bis 16 % ist (wobei [A] die Molarität des Elements A darstellt, [Ni] die Molarität von Nickel darstellt, und [Zn] die Molarität von Zink in dem Kristalliten darstellt); und
[Zn]/([Ni] + [A] + [Zn]) 1 bis 10 % ist.

6. Alkali-Speicherbatterie, umfassend:
eine positive Elektrode, die das Positivelektrodenmaterial für eine Alkali-Speicherbatterie nach einem der Ansprüche 1 bis 5 enthält;
eine negative Elektrode; und
eine Alkali-Elektrolytlösung.

## Revendications

1. Matériau d'électrode positive pour un accumulateur alcalin, comprenant :
de l'hydroxyde de nickel, et
au moins un parmi un composé de Sr, un composé de Ca, et un composé d'au moins un élément choisi dans le groupe constitué de l'Y et des éléments lanthanides de numéro atomique 62 (Sm) au numéro atomique 72 (Lu),
**caractérisé en ce que**
un élément A en tant qu'au moins un élément choisi dans le groupe constitué de Al, et de Ga est maintenu en solution solide dans un cristallite de l'hydroxyde de nickel ;
la quantité de l'élément A, [A]/([Ni] + [A]) est supérieure ou égale à 5 % et est inférieure ou égale à 16 % (où [A] représente la molarité de l'élément A et [Ni] représente la molarité du Ni dans le cristallite) ; et
l'hydroxyde de nickel comprend de l'hydroxyde de nickel de phase α et de l'hydroxyde de nickel de phase β.

2. Matériau d'électrode positive pour un accumulateur alcalin selon la revendication 1, dans lequel le composé d'au moins un élément choisi dans le groupe constitué de l'Y et des éléments lanthanides de numéro atomique 62 (Sm) au numéro atomique 72 (Lu) est inclus dans une quantité supérieure ou égale à 0,25 % en masse et inférieure ou égale à 6 % en masse en terme de métal par rapport aux 100 % de la masse de la partie solide du matériau de l'électrode positive.

3. Matériau d'électrode positive pour un accumulateur alcalin selon la revendication 1, ou 2, dans lequel un composé d'au moins un parmi le Ca et le Sr est inclus dans une quantité supérieure ou égale à 0,2 % en masse et inférieure ou égale à 5 % en masse par rapport aux 100 % de la masse de la partie solide du matériau de l'électrode positive.

4. Matériau d'électrode positive pour un accumulateur alcalin selon l'une quelconque des revendications 1 à 3, dans lequel du Co est en outre maintenu en solution solide dans le cristallite d'hydroxyde de nickel.

5. Matériau d'électrode positive pour un accumulateur alcalin selon l'une quelconque des revendications 1 à 4, dans lequel
du Zn est en outre maintenu en solution solide dans le cristallite d'hydroxyde de nickel ;
[A]/([Ni] + [A]) + [Zn]) est compris entre 5 et 16 % (où [A] représente la molarité de l'élément A, [Ni] représente la molarité du nickel, et [Zn] représente la molarité du zinc dans le cristallite) ; et
[Zn]/([Ni] + [A] + [Zn]) va de 1 à 10 %.

6. Accumulateur alcalin comprenant :
une électrode positive contenant un matériau d'électrode positive pour accumulateur selon l'une quelconque des revendications 1 à 5 ;
une électrode négative ; et
une solution d'électrolyte alcalin.
